Europäisches Patentamt

European Patent Office

Office européen des brevets

(11) Numéro de publication : **0 520 864 A1**

# (12) DEMANDE DE BREVET EUROPEEN

(21) Numéro de dépôt : **92401716.3**

(22) Date de dépôt : **19.06.92**

(51) Int. Cl.$^5$ : **G09F 15/00**, A47F 5/10, F16B 12/32

(30) Priorité : **21.06.91 FR 9107635**

(43) Date de publication de la demande :
**30.12.92 Bulletin 92/53**

(84) Etats contractants désignés :
**AT BE CH DE DK ES GB GR IT LI LU MC NL SE**

(71) Demandeur : **FAPEC**
**7, rue de la Croix Vigneron**
**F-95160 Montmorency (FR)**

(72) Inventeur : **Heimendinger, Bernard**
**11 bis, rue Le Laboureur**
**F-95160 Montmorency (FR)**

(74) Mandataire : **Hud, Robert**
**Cabinet COLLIGNON 6, rue de Madrid**
**F-75008 Paris (FR)**

(54) **Dispositif pour l'accrochage, sur tous types de gondole, d'éléments de décoration ou similaires.**

(57)   Le dispositif comprend deux demi-rails identiques, disposés symétriquement par rapport au bord longitudinal supérieur de la paroi 1 de gondole. Chaque demi-rail comprend un longeron 7, sur la face interne duquel est soudée une cornière 8 à aile horizontale 9, et une plaque centrale de support 13 en appui sur des plots 10 fixés aux ailes horizontales 9. La plaque 13 présente des fentes transversales 14 se superposant à des trous de guidage 11 portés par les plots 10. On règle à volonté l'écartement mutuel des demi-rails et on fixe l'ensemble dans la position choisie par une vis traversant la fente 14 et le trou 11 superposés. Un organe mobile de support d'un élément de décoration comprend des éléments 18, 19 superposés présentant chacun des ailes horizontales 21, 23 respectivement entre lesquelles se trouve un chemin de guidage horizontal 16 solidaire de la plaque centrale 13. Des vis 26 permettent de serrer ensemble les éléments 18 et 19 pour immobiliser l'organe de support en toute position choisie le long du chemin de guidage 16.

L'invention s'applique à l'accrochage facile d'éléments de décoration en haut d'une gondole, quelle que soit l'épaisseur de la paroi de celle-ci.

FIG.2

La présente invention concerne la fixation, sur des meubles de présentation à plateaux superposés utilisés dans les magasins en libre service et généralement désignés sous le nom de gondoles, d'éléments tels que des éléments de décoration ou de valorisation des linéaires, ou des éléments d'information.

Il existe de nombreux types de gondole actuellement utilisés dans les magasins en libre service, et ces gondoles diffèrent les unes des autres en particulier par leurs dimensions, notamment en largeur et en épaisseur. Du fait de ces différences il est nécessaire, lorsqu'on veut accrocher des éléments de décoration, d'information ou de valorisation à une gondole, d'utiliser un dispositif d'accrochage particulièrement adapté aux dimensions de la gondole concernée, ce qui constitue une complication et oblige à détenir toute une gamme de dispositifs d'accrochage dont chacun est adapté à un type particulier de gondole.

La présente invention a pour objet de remédier à cet inconvénient et elle propose à cet effet un dispositif d'accrochage de fabrication simple, de coût réduit et d'utilisation facile qui est conçu pour pouvoir se fixer sur tous types de gondole.

Selon l'invention, le dispositif comprend deux demi-rails identiques destinés à être disposés de part et d'autre du bord supérieur longitudinal de la paroi de gondole à équiper, et un élément central horizontal venant en appui sur des ailes horizontales intérieures en regard des deux demi-rails, ledit élément central horizontal présentant des fentes oblongues transversales qui viennent en regard de trous de guidage portés par lesdites ailes horizontales des demi-rails, une vis traversant chaque fente oblongue et le trou de guidage associé permettant de régler l'écartement mutuel des demi-rails en autorisant l'adaptation du dispositif à des parois de gondole d'épaisseurs diverses.

L'élément central horizontal présente, sur la longueur du rail, deux chemins de guidage horizontaux en regard, alors qu'une pièce de support en deux éléments, comportant des ailes horizontales superposées qui sont disposées de part et d'autre du chemin de guidage horizontal, guide le déplacement de la pièce de support le long du rail et, lorsque les deux éléments de la pièce de support sont serrés l'un contre l'autre, immobilise celle-ci en toute position désirée. La pièce de support est solidaire sur sa face supérieure de tout organe approprié (crémaillère, tube, etc...) pour la fixation d'un élément de décoration ou de signalisation. On peut bien sûr monter sur le rail le nombre d'organes de support indépendants nécessaires pour le maintien de l'élément de décoration.

On comprend que, pour équiper la paroi d'une gondole d'un élément de décoration au moyen du dispositif d'accrochage selon l'invention, on réalise l'assemblage des deux demi-rails et de l'élément central en réalisant l'écartement maximum des demi-rails, on monte sur l'élément central les pièces de support adaptées à l'élément de décoration choisi et, après avoir réglé la position des pièces de support et les avoir immobilisées dans cette position, on met en place le rail par appui des ailes horizontales des demi-rails sur le bord supérieur de la paroi. Il suffit ensuite de rapprocher les demi-rails l'un de l'autre pour serrer ladite paroi, puis d'immobiliser les demi-rails dans cette position par engagement de vis dans chaque ensemble formé par une fente oblongue et le trou de guidage correspondant.

Pour bien faire comprendre le dispositif selon l'invention on en décrira ci-après, à titre d'exemple sans caractère limitatif, une forme d'exécution préférée en référence au dessin schématique annexé dans lequel :

la figure 1 est une vue perspective d'une gondole équipée d'un dispositif selon l'invention servant à l'accrochage d'un fronton lumineux ;

la figure 2 est une vue perspective à plus grande échelle montrant, sur une partie de sa longueur, le dispositif d'accrochage de la figure 1 ;

la figure 3 est une vue en coupe verticale transversale partielle prise suivant la flèche A de la figure 2 ;

la figure 4 est une vue en élévation, à plus grande échelle, de la face intérieure d'un demi-rail d'accrochage du dispositif selon l'invention ; et

la figure 5 est une vue en plan de l'élément central de support du dispositif d'accrochage selon l'invention.

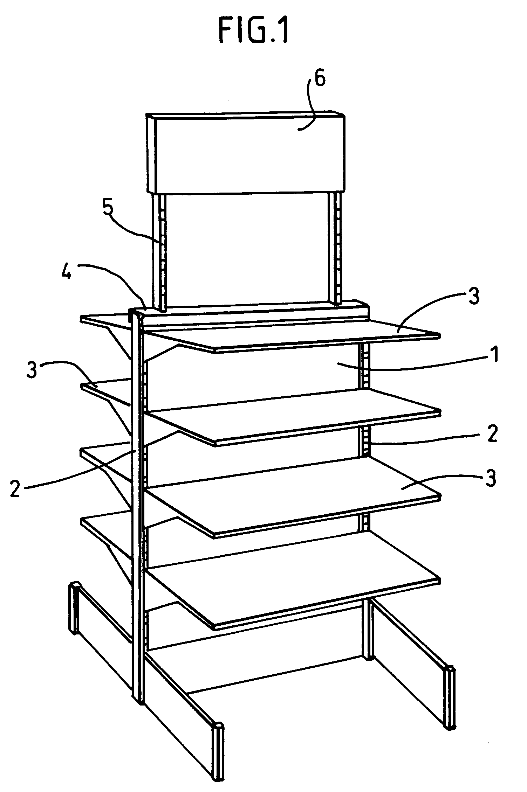

A la figure 1 on a représenté une gondole double dont la paroi verticale centrale 1 est solidaire, à chaque extrémité, d'une crémaillère verticale 2 permettant de supporter des plateaux superposés 3 disposés de chacun des deux côtés de la paroi 1. Enserrant le bord horizontal supérieur de la paroi 1 on a représenté un dispositif 4 selon l'invention qui supporte des portions de crémaillère 5 à l'extrémité supérieure desquelles est accroché un fronton lumineux 6.

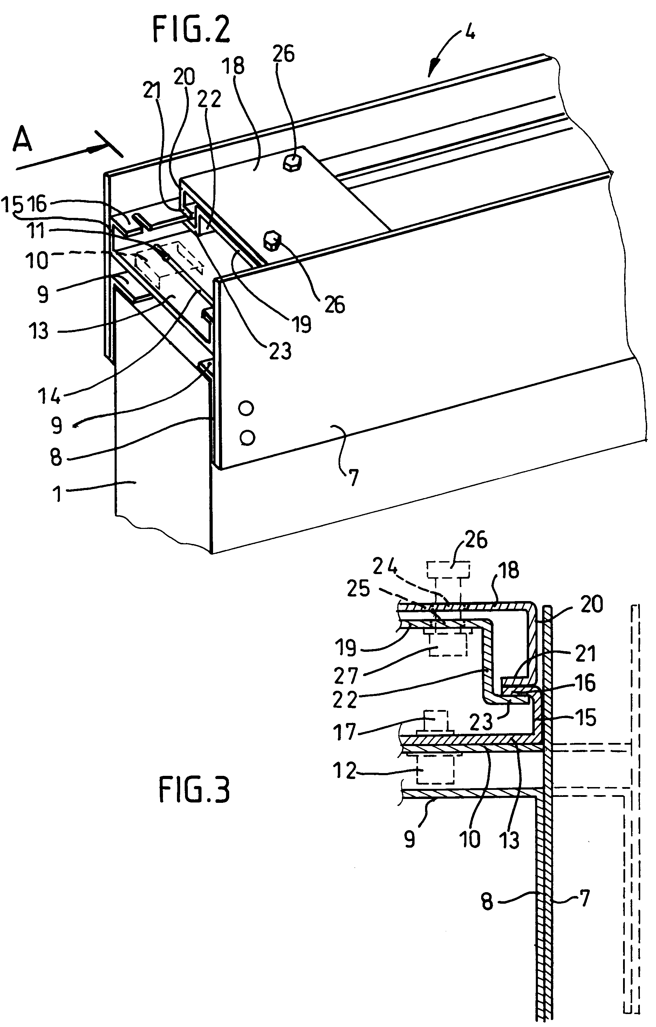

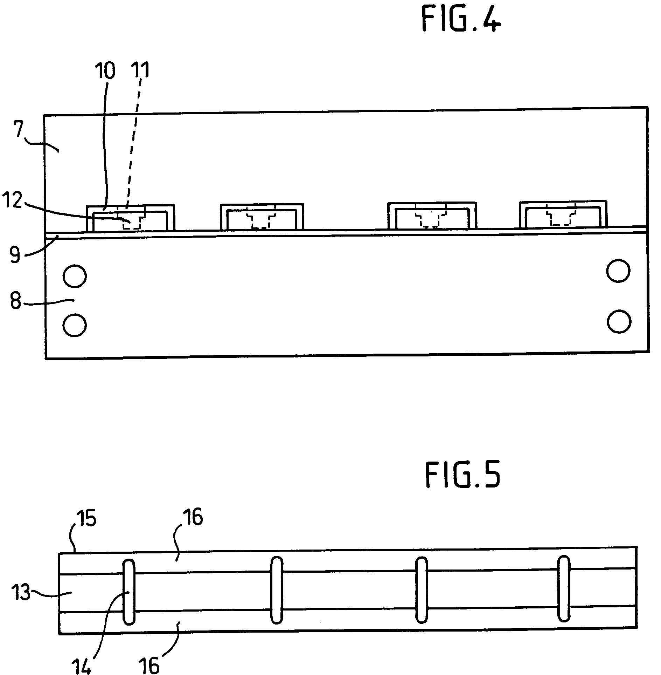

En référence maintenant aux figures 2 à 5, on voit que le dispositif 4 est contitué par deux demi-rails identiques qui sont disposés symétriquement par rapport à la paroi 1 de la gondole. Chaque demi-rail est constitué par un longeron en tôle 7 de forme rectangulaire sur la partie inférieure de la face interne duquel est fixée par soudage une cornière 8, de même longueur que le longeron 7, dont l'aile horizontale supérieure 9 est dirigée vers l'intérieur. Sur la face supérieure de l'aile horizontale 9 sont fixés par soudage, à des intervalles réguliers, des plots identiques 10 en tôle de métal à profil en U renversé dont l'axe est orienté transversalement à la direction de l'aile 9. Au centre de la face supérieure du plot 10 est ménagé un trou 11 qui débouche dans une douille 12 à taraudage intérieur solidaire de la face interne du plot 10.

Un élément central de support 13, de même longueur que les demi-rails 8, est constitué par une plaque de tôle de forme rectangulaire présentant, à intervalles réguliers sur toute sa longueur, des fentes oblongues 14 orientées transversalement. Symétriquement à l'axe longitudinal de la plaque de tôle 13, chaque bord longitudinal de celle-ci est replié vers le haut à 90° pour former une aile verticale 15, puis à nouveau de 90° vers l'intérieur pour former une aile horizontale 16. La plaque 13 est destinée à venir s'appuyer par sa face inférieure sur la face supérieure des ailes horizontales 9 en regard des deux demi-rails, les fentes oblongues 14 de la plaque 13 venant en face des trous 11 des plots 10 solidaires des ailes 9. Au moyen de vis 17 traversant les fentes 19 et les trous 11 en regard, et se vissant dans les douilles correspondantes 12, on solidarise ensemble les deux demi-rails et l'élément central de support. On comprend que grâce à la disposition à fentes oblongues 14 on peut, les vis 17 étant desserrées, régler à volonté l'écartement des deux éléments de serrage entre une position d'écartement minimum dans laquelle la face intérieure de chaque demi-rail vient buter contre la face extérieure de l'aile verticale 15 de l'élément central de support et une position d'écartement maximum dans laquelle chaque extrémité de la fente oblongue 19 vient en regard du trou 11 du plot 10 correspondant. Comme, ainsi qu'on le voit aux figures 1 et 2, la fixation du dispositif est obtenue en appuyant les ailes horizontales 9 des cornières 8 sur le bord supérieur de la paroi 1 de la gondole, puis en serrant celui-ci entre les faces verticales intérieures des cornières 8, ce qui permet d'adapter très facilement le dispositif à l'épaisseur de cette paroi. A la figure 3 on a représenté en trait plein un demi-rail en position d'écartement minimum et, en trait mixte, le même demi-rail en position d'écartement maximum.

Le dispositif comprend encore deux éléments complémentaires 18, 19 qui sont conçus pour supporter directement les éléments de décoration ou similaires à accrocher. L'élément supérieur 18 présente, inversé, le même profil que l'élément central de support 13 avec une partie horizontale en tôle métallique dont chacun des deux bords latéraux est replié, symétriquement par rapport à un plan vertical longitudinal médian, de 90° vers le bas pour constituer une aile vertical 20, puis de 90° vers l'intérieur pour constituer une aile horizontale 21. Les ailes horizontales 21 de l'élément supérieur 18 sont destinées à venir en appui respectivement sur la face supérieure des ailes horizontales 16 opposées de l'élément de support central 13. L'élément inférieur 19 comprend une partie centrale horizontale qui se termine de chaque côté, symétriquement par rapport à un plan vertical longitudinal médian, par une partie en S comprenant une aile verticale 22 orientée vers le bas qui se poursuit par une aile horizontale 23 dirigée vers l'extérieur. Les ailes horizontales 23 sont destinées à s'appliquer respectivement contre la face inférieure des ailes horizontales 16 opposées de l'élément de support central 13 et, à cet effet, l'écartement des deux ailes verticales de l'élément inférieur 19 est un peu moindre que l'écartement des bords en regard des ailes horizontales 16 de l'élément 13.

En deux points disposés en diagonale l'élément supérieur 18 et l'élément inférieur 19 présentent des trous superposés, respectivement 24 et 25, destinés à être traversés par une vis 26 qui se visse dans une douille 27 à taraudage intérieur solidaire de la face inférieure de l'élément 19. L'élément 18 porte sur sa face supérieure, fixée par soudage, la portion de crémaillère 6 à laquelle sera accrochée une extrémité du fronton lumineux.

On comprend que, les vis 26 qui relient les éléments 18 et 19 n'étant pas serrées, on peut déplacer ensemble ces deux éléments par coulissement le long des ailes 16 de l'élément central 13 jusqu'à la position désirée pour la portion de crémaillère 5. L'immobilisation dans cette position est obtenue par vissage des vis 26, les ailes horizontales 21 et 23 respectivement des éléments 18 et 19 étant serrées en direction l'une de l'autre et jouant le rôle de mâchoires qui viennent serrer entre elles les ailes 16 des éléments 13.

On notera que la description ci-dessus a été donnée à simple titre d'exemple, sans caractère limitatif, et que des adjonctions ou des modifications constructives pourraient y être apportées sans sortir du cadre de l'invention. On comprendra en particulier qu'on a décrit l'invention comme s'appliquant à l'accrochage d'un fronton lumineux, mais qu'elle pourrait être utilisée aussi bien pour l'accrochage de toutes autres sortes d'éléments de décoration, de valorisation ou d'information, ou encore un toit recouvrant la gondole.

**Revendications**

1. Dispositif pour l'accrochage sur tous types de gondole d'éléments de décoration ou similaires, caractérisé en ce qu'il comprend deux demi-rails identiques (7,8) conçus pour serrer entre eux le bord longitudinal supérieur de la paroi verticale (1) d'une gondole, un élément central horizontal (13) disposé entre les deux demi-rails (7,8) et destiné à être fixé à ceux-ci pour constituer un ensemble de support, ledit élément central (13) comportant des moyens (19) pour régler l'écartement mutuel des demi-rails (7,8) dans le plan horizontal de façon à serrer entre eux ledit bord longitudinal supérieur de la paroi (1) de gondole, et au moins un organe de support (18, 19) monté pour pouvoir se déplacer le long dudit élément central (13) et être immobilisé en toute position désirée le long de celui-ci, ledit élément de support (18, 19) étant solidaire d'organes d'accrochage (5) desdits éléments de décoration (6).

2. Dispositif selon la revendication 1, caractérisé en ce que chaque demi-rail (17,18) présente sur sa face intérieure une aile horizontale (9) dont la face supérieure sert d'appui pour un bord longitudinal dudit élément central horizontal (13), lesdits moyens de réglage de l'écartement des demi-rails (7, 8) comprenant au moins une fente transversale (19) ménagée dans l'élément central horizontal (13) et venant en regard d'un trou de réglage (11) porté par chaque aile horizontale (9), une vis (17) traversant ladite fente (19) et ledit trou (11) pour solidariser le demi-rail (7,8) et l'élément central (13) dans leur position mutuelle désirée.

3. Dispositif selon la revendication 2, caractérisé en ce que le trou de réglage (11) porté par l'aile horizontale (9) est ménagé dans la face supérieure d'un plot (10) à profil en U renversé dont l'extrémité libre des ailes est fixée à ladite aile horizontale (9), ledit trou de réglage (11) débouchant dans une douille taraudée (12) logée entre le plot (10) et l'aile horizontale (9).

4. Dispositif selon l'une quelconque des revendications 1 à 3, caractérisé en ce que ledit organe de support est constitué de deux éléments (18, 19) qui présentent des moyens complémentaires (21, 23) assurant le guidage de leur déplacement le long dudit élément central horizontal (13) et leur immobilisation en tout point choisi le long de cet élément (13).

5. Dispositif selon la revendication 4, caractérisé en ce que lesdits éléments (18, 19) de l'organe de support comprennent des parties centrales superposées et des bords longitudinaux horizontaux qui pour l'un (21) s'appuient sur la face supérieure d'un chemin de guidage horizontal (16) et pour l'autre (23) sont à proximité de la face inférieure dudit chemin de guidage horizontal (16), un moyen (26) de serrage desdits bords longitudinaux horizontaux reliant ensemble lesdits éléments (18, 19) de l'organe de support.

6. Dispositif selon la revendication 5, caractérisé en ce que ledit moyen de serrage comprend une vis (26) traversant des ouvertures en regard (24, 25) des parties centrales desdits éléments (18, 19) et se vissant dans une douille taraudée (27) portée par l'un desdits éléments (19).

7. Dispositif selon la revendication 5 ou la revendication 6, caractérisé en ce que ledit chemin de guidage (16) est constitué par deux retours latéraux horizontaux de l'élément central (3) disposés à un niveau supérieur à celui-ci.

8. Dispositif selon l'une quelconque des revendications 2 à 7, caractérisé en ce que l'aile horizontale (9) de chaque demi-rail (7,8) vient en appui sur le bord supérieur de la paroi (1) de gondole à équiper.

# FIG.1

# FIG.2

# FIG.3

# FIG.4

# FIG.5

**Office européen des brevets**

# RAPPORT DE RECHERCHE EUROPEENNE

Numero de la demande

EP 92 40 1716

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 601 256 (BOWERS; CLEMENT)<br>* abrégé; figures 1,4,5 *<br>--- | 1 | G09F15/00<br>A47F5/10<br>F16B12/32 |
| A | GB-A-956 562 (HOLLWARTH)<br>* figure 8 * | 1 | |
| | ----- | | |
| | | | **DOMAINES TECHNIQUES RECHERCHES (Int. Cl.5)**<br><br>A47F<br>G09F<br>F16B<br>A47B |

Le présent rapport a été établi pour toutes les revendications

| Lieu de la recherche | Date d'achèvement de la recherche | Examinateur |
|---|---|---|
| LA HAYE | 11 AOUT 1992 | DE GROOT R.K. |